# EUROPEAN PATENT APPLICATION

(11) **EP 4 738 139 A1**
(43) Date of publication of application: **06.05.2026**
(21) Application number: 25192732.3
(22) Date of filing: 30.07.2025
(51) Int. Cl.: G06F 16/11, G06F 16/17, G06F 16/23, G06F 16/2455

(54) **CHANGE EVENTS STREAM VIA UNIFIED DIFFERENCE DATA ACCESS LAYER FOR DATA PROTECTION PLATFORMS**

(30) Priority: 31.10.2024 US 202418933045
(71) Applicant: Cohesity, Inc., Santa Clara, California 95054 (US)
(72) Inventor: GUPTA, Apurv, Santa Clara, 95054 (US); BAJAJ, Rupesh, Santa Clara, 95054 (US); ARON, Mohit, Santa Clara, 95054 (US); AGARWAL, Akshat, Santa Clara, 95054 (US); GUTURI, Venkata Ranga Radhanikanth, Santa Clara, 95054 (US); DUTTAGUPTA, Anirvan, Santa Clara, 95054 (US); KEDAR, Idan, Santa Clara, 95054 (US)
(74) Representative: EIP

(57) **Abstract**

A computing system implementing a data management platform, the computing system comprising processing means. The processing means may expose, via a single application programming interface executed by the data management platform, a unified difference data access layer that provides an abstraction layer by which to obtain difference data between two or more events corresponding to protected data, and interface, via the single application programming interface, with the unified difference data access layer to obtain the difference data. The processing means may also publish the difference data to a change event stream, receive, from an application, a request to access at least a portion of the difference data published to the change event stream, and output, responsive to the request and to the application, at least the portion of the difference data published to the change event stream.

## Description

### TECHNICAL FIELD

This disclosure relates to data management in computing systems.

### BACKGROUND

Data may be commonly queried to retrieve specific information or datasets from storage systems, enabling data analysis, data recovery, data mining, forensic analysis, and compliance with regulatory requirements. Data may include metadata defining characteristics of the data, including file system metadata concerning file creation, file edit, file deletion, file structure, creator, owner, modification timestamps, etc.

A document may be a file created and digitally stored. Documents can include PDFs, spreadsheets, emails, text files, word processor files, HTML, XML, transcripts, and presentations, for example. In some cases, text of the documents can be transcribed from media (e.g., speech transcription), encoded in the documents or visible in media (e.g., text displayed in a video, such as closed captioning), or otherwise represented in media.

In some instances, various applications executed by a data management platform may perform comparisons between snapshots of the data (where snapshots may refer to incremental or full backups) to determine differences between metadata or other data between the snapshots. Each application may compute a distinct and separate difference (which may be referred to as a "diff") between two snapshots for purposes of further analysis (e.g., to reduce computing resource consumption by only considering changes to a subset of the data rather than the full set of data) in terms of performing, as a few examples, data analysis, data recovery, data mining, forensic analysis, and/or compliance with regulatory requirements.

### SUMMARY

According to various aspects of the techniques described in this disclosure, a data management platform may expose a unified difference data access layer (via a single application programming interface - API) by which to access differences (which may, again, be referred to as a "diffs") in data between two snapshots (which again may refer to an incremental backup or a full backup). Rather than compute various diffs differently to achieve different forms of analysis (which may result in a fragmented code base that is difficult to support), the data management platform may expose a unified diff data access layer (UDDAL) by which to request diffs in a uniform and extendable manner. The single API may be invoked to publish a change event stream (which may also be referred to as a "delta stream") that may be referenced by a number of different applications that may request diffs between two different snapshots, which may be limited to diffs in data (which may also be referred to as "content data"), metadata, or both. Metadata may define characteristics of the content data, including file system metadata concerning file creation, file edit, file deletion, file structure, creator, owner, modification timestamps, etc.

The techniques may provide one or more technical advantages that facilitate one or more practical applications. Existing data management platforms for interacting with diffs may include a number of different applications (which may be referred to as "apps") that generate separate differences to achieve different levels of analysis. Each of the apps may generate the diffs between two snapshots differently or in a proprietary manner. This results in difficulties managing the code base as any changes to one app for a particular diff may not carry over to a different app, which requires separate maintenance of each app. The techniques may provide a universal diff data access layer (UDDAL) exposed via the single API that is invoked to produce a uniform change event stream that each of the apps may reference to retrieve one or more diffs. This UDDAL exposed via the single API may allow for a more uniform code base, where updates to the UDDAL are available to all apps by way of the change event stream without having to perform much if any edits of the apps.

The techniques may provide advantages over conventional data management platforms in terms of unifying dataset analysis via the uniform difference data access layer accessible via the single API. Rather than individually update the diff generation performed by each individual app (which may result in diffs having different characteristics), the UDDAL may provide the single API by which diffs can be generated in the form of the change event stream and filtered to expose only the changes that each of the various apps require to perform further analysis. By limiting the number of updates required, apps may be developed and deployed more quickly (considering that individual testing of the tools and/or agent diff generation is reduced to a single instance rather than being performed individually). Further, the single API allows for better extensibility in that only a single API needs to be updated to extend the functionality (in terms of generating diffs). In addition, the single API may produce a change event stream (which may be referred to as a "delta stream") to which apps may subscribe to retrieve a specific type of diff data in near-real-time as the changes are incrementally published to the change event stream.

In this respect, various aspects of the delta stream techniques may enable data management platforms to more uniformly produce diffs used by apps to perform further processing. The ability to generate uniform diffs may allow the data management platform to provide extensibility to support new or updated apps and promotes a uniform platform by which to build newer apps to address growing needs from organizations in terms of insights into the datasets currently being managed. Developing a uniform platform allows for better interoperability with third party apps while also simplifying development, testing, and deployment of existing first party apps in terms of offloading generation and filtering of diffs (using a change event stream publishing diff data according to an extensible schema).

The techniques may thereby improve one or more of the technical fields of data processing, management, querying, and data insight generation.

For example, various aspects of the techniques are directed to a computing system implementing a data management platform, the computing system comprising: processing means configured to: expose, via a single application programming interface executed by the data management platform, a unified difference data access layer that provides an abstraction layer by which to obtain difference data between two or more events corresponding to protected data; interface, via the single application programming interface, with the unified difference data access layer to obtain the difference data; publish the difference data to a change event stream; receive, from an application, a request to access at least a portion of the difference data published to the change event stream; and responsive to the request, output, to the application, at least the portion of the difference data published to the change event stream.

As another example, various aspects of the techniques are directed to a method for a data management platform, the method comprising: exposing, via a single application programming interface executed by the data management platform, a unified difference data access layer that provides an abstraction layer by which to obtain difference data between two or more events corresponding to protected data; interfacing, via the single application programming interface, with the unified difference data access layer to obtain the difference data; publishing the difference data to a change event stream; receiving, from an application, a request to access at least a portion of the difference data published to the change event stream; and responsive to the request, outputting, to the application, at least the portion of the difference data published to the change event stream.

As another example, various aspects of the techniques are directed to one or more computer-readable storage media storing instructions that, when executed, causes processing means to: expose, via a single application programming interface executed by a data management platform, a unified difference data access layer that provides an abstraction layer by which to identify difference data between two or more events corresponding to protected data; interface, via the single application programming interface, with the unified difference data access layer to obtain the difference data; publish the difference data to a change event stream; receive, from an application, a request to access at least a portion of the difference data published to the change event stream; and responsive to the request, output, to the application, at least the portion of the difference data published to the change event stream.

The details of one or more examples of the invention are set forth in the accompanying drawings and the description below. Other features, objects, and advantages of the invention will be apparent from the description and drawings, and from the claims.

### BRIEF DESCRIPTION OF THE DRAWINGS

FIG. 1 is a block diagram illustrating an example system for data management, in accordance with techniques of the present disclosure.
FIG. 2 is a block diagram illustrating an example architecture of a universal difference data access layer for data platforms operating according to various aspects of the techniques described in this disclosure.
FIG. 3 is a block diagram illustrating an example of a computing system that implements data management platform shown in FIG. 1, in accordance with techniques of this disclosure.
FIG. 4 is a flowchart illustrating example operation of the data management platform shown in the example of FIG. 1 in accordance with various aspects of the techniques.

Like reference characters denote like elements throughout the text and figures.

### DETAILED DESCRIPTION

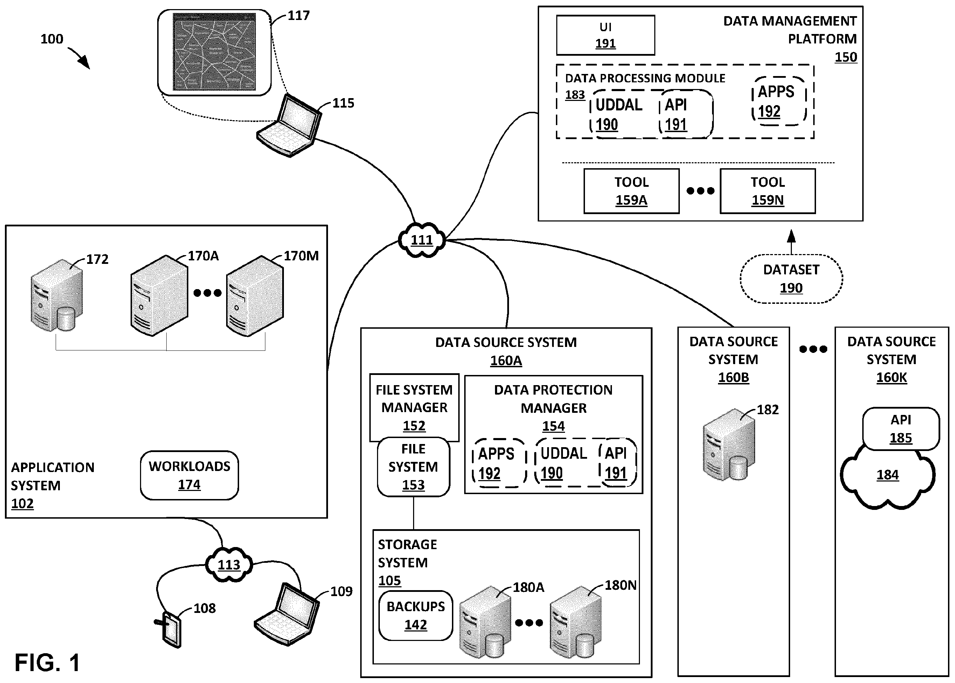

FIG. 1 is a block diagram illustrating an example system for data management, in accordance with one or more examples of the present disclosure. In the example of FIG. 1, system 100 includes application system 102. Application system 102 represents a collection of hardware devices, software components, and/or data stores that can be used to implement one or more applications or services provided to one or more mobile devices 108 and one or more client devices 109 via a network 113. Application system 102 may include one or more physical or virtual computing devices that execute workloads 174 for the applications or services. Workloads 174 may include one or more virtual machines, containers, Kubernetes pods each including one or more containers, bare metal processes, and/or other types of workloads. Application system 102 may be associated with an enterprise or other entity.

In the example of FIG. 1, application system 102 includes application servers 170A-170M (collectively, "application servers 170") connected via a network with database server 172 implementing a database. Other examples of application system 102 may include one or more load balancers, web servers, network devices such as switches or gateways, or other devices for implementing and delivering one or more applications or services to mobile devices 108 and client devices 109. Application system 102 may include one or more file servers. The one or more file servers may implement a primary file system for application system 102. (In such instances, file system 153 may be a secondary file system that provides backup, archive, and/or other services for the primary file system. Reference herein to a file system may include a primary file system or secondary file system, e.g., a primary file system for application system 102 or file system 153 operating as either a primary file system or a secondary file system.) Application system 102 may be located on premises and/or in one or more data centers, with each data center a part of a public, private, or hybrid cloud. The applications or services may be distributed applications. The applications or services may support enterprise software, financial software, office or other productivity software, data analysis software, end user relationship management, web services, educational software, database software, multimedia software, information technology, health care software, or other type of applications or services. The applications or services may be provided as a service (-aaS) for Software-aaS, Platform-aaS, Infrastructure-aaS, Data Storage-aas (dSaaS), or other type of service.

In some examples, application system 102 may represent an enterprise system that includes one or more workstations in the form of desktop computers, laptop computers, mobile devices, enterprise servers, network devices, and other hardware to support enterprise applications. Enterprise applications may include enterprise software, financial software, office or other productivity software, data analysis software, end user relationship management, web services, educational software, database software, multimedia software, information technology, health care software, or other type of applications.

In the example of FIG. 1, system 100 includes a data source system 160A that provides a file system 153 and backup functions to an application system 102 using storage system 105. In some cases, data source 160A may use a separate, secondary storage system (not shown) to store backup data. Data source system 160A implements a distributed file system 153 and a storage architecture to facilitate access by application system 102 to file system data and to facilitate the transfer of data between storage system 105 and application system 102 via network 111. With the distributed file system, data source system 160A enables devices of application system 102 to access file system data, via network 111 using a communication protocol, as if such file system data was stored locally (e.g., to a hard disk of a device of application system 102). Example communication protocols for accessing files and objects include Server Message Block (SMB), Network File System (NFS), or AMAZON Simple Storage Service (S3). File system 153 may be a primary file system or secondary file system for application system 102.

File system manager 152 represents a collection of hardware devices and software components that implements file system 153 for data source system 160A. Examples of file system functions provided by the file system manager 152 include storage space management including deduplication, file naming, directory management, metadata management, partitioning, and access control. File system manager 152 executes a communication protocol to facilitate access via network 111 by application system 102 to files and other objects stored to storage system 105.

Data source system 160A includes storage system 105 having one or more storage devices 180A-180N (collectively, "storage devices 180"). Storage devices 180 may represent one or more physical or virtual compute and/or storage devices that include or otherwise have access to storage media. Such storage media may include one or more of flash drives, solid state drives (SSDs), hard disk drives (HDDs), forms of electrically programmable memories (EPROM) or electrically erasable and programmable (EEPROM) memories, and/or other types of storage media used to support data source system 160A. Different storage devices of storage devices 180 may have a different mix of types of storage media. Each of storage devices 180 may include system memory. Each of storage devices 180 may be a storage server, a network-attached storage (NAS) device, or may represent disk storage for a compute device. Storage system 105 may include a redundant array of independent disks (RAID) system, Storage as a service (STaaS), Network Attached Storage (NAS), and/or a Storage area Network (SAN). In some examples, one or more of storage devices 180 are both compute and storage devices that execute software for data source system 160A, such as file system manager 152 and data protection manager 154 in the example of system 100, and store objects and metadata for data source system 160A to storage media. In some examples, separate compute devices (not shown) execute software for data source system 160A, such as file system manager 152 and data protection manager 154 in the example of system 100. Each of storage devices 180 may be considered and referred to as a "storage node" or simply as "node". In some examples, storage devices 180 may represent virtual machines running on a supported hypervisor, a cloud virtual machine, a physical rack server, or a compute model installed in a converged platform.

In some examples, data source system 160A may run on physical systems, virtually, or natively in the cloud. For instance, data source system 160A may be deployed to a physical cluster, a virtual cluster, or a cloud-based cluster running in a private cloud, on-prem, hybrid cloud, or a public cloud deployed by a cloud service provider. In some examples of system 100, multiple instances of data source system 160A may be deployed, and file system 153 may be replicated among the various instances. In some cases, data source system 160A may be a compute cluster that represents a single management domain. The number of storage devices 180 may be scaled to meet performance needs.

Data source system 160A may implement and offer multiple storage domains to one or more tenants or to segregate workloads 174 that require different data policies. A storage domain may be a data policy domain that determines policies for deduplication, compression, encryption, tiering, and other operations performed with respect to objects stored using the storage domain. In this way, data source system 160A may offer users the flexibility to choose global data policies or workload specific data policies. Data source system 160A may support partitioning.

A view may be a protocol export that resides within a storage domain. A view may inherit data policies from its storage domain, though additional data policies may be specified for the view. Views can be exported via SMB, NFS, S3, and/or another communication protocol. Policies that determine data processing and storage by data source system 160A may be assigned at the view level. A protection policy may specify a backup frequency and a retention policy.

Each of network 113 and network 111 may be the internet or may include or represent any public or private communications network or other network. For instance, each of network 113 and network 111 may be a cellular, Wi-Fi^{®}, ZigBee^{®}, Bluetooth^{®}, Near-Field Communication (NFC), satellite, enterprise, service provider, local area network, and/or other type of network enabling transfer of data between computing systems, servers, computing devices, and/or storage devices. One or more of such devices may transmit and receive data, commands, control signals, and/or other information across network 113 or network 111 using any suitable communication techniques. Each of network 113 or network 111 may include one or more network hubs, network switches, network routers, satellite dishes, or any other network equipment. Such network devices or components may be operatively inter-coupled, thereby providing for the exchange of information between computers, devices, or other components (e.g., between one or more client devices or systems and one or more computer/server/storage devices or systems). Each of the devices or systems illustrated in FIG. 1 may be operatively coupled to network 113 and/or network 111 using one or more network links. The links coupling such devices or systems to network 113 and/or network 111 may be Ethernet, Asynchronous Transfer Mode (ATM) or other types of network connections, and such connections may be wireless and/or wired connections. One or more of the devices or systems illustrated in FIG. 1 or otherwise on network 113 and/or network 111 may be in a remote location relative to one or more other illustrated devices or systems.

Application system 102, using file system 153 provided by data source system 160A, may generate objects and other data that file system manager 152 may create, manage, and cause to be stored to storage system 105. For this reason, application system 102 may alternatively be referred to as a "source system," and file system 153 for application system 102 may alternatively be referred to as a "source file system." Application system 102 may for some purposes communicate directly with storage system 105 via network 111 to transfer objects, and for some purposes communicate with file system manager 152 via network 111 to obtain objects or metadata indirectly from storage system 105. File system manager 152 generates and stores metadata to storage system 105. The collection of data stored to storage system 105 and used to implement file system 153 is referred to herein as file system data. File system data may include the aforementioned metadata and objects. Metadata may include file system objects, tables, trees, or other data structures; metadata generated to support deduplication; or metadata to support snapshots. Objects that are stored may include files, virtual machines, databases, applications, pods, container, any of workloads 154, system images, directory information, or other types of objects used by application system 102. These may also be referred to as "backup objects." Objects of different types and objects of a same type may be deduplicated with respect to one another.

Data source system 160A includes data protection manager 154 that may provide data protection operations for source systems. This may include applying data protection to file system data for file system 153; workloads 174; or programs and/or data of any of application servers 170, database server 172, or other computing device of application system 102. In the example of system 100, data protection manager 154 backs up protected data to one or more backups 142 ("backups 142") stored by storage system 105. In some examples, a separate storage system (not shown) may store backups 142. The separate storage system may deployed and managed by a cloud storage provider and referred to as a "cloud storage system." In some examples, the separate storage system is co-located with storage system 105 in a data center, on-prem, or in a private, public, or hybrid cloud. The separate storage system may be considered a "backup" or "secondary" storage system for storage system 105 when storage system 105 is a primary storage system. The separate storage system may be referred to as an "external target" for backups 142). Any of data source systems 160B-160K may be the separate, secondary storage system for data source system 160A.

Because storage system 105 is often more difficult or expensive to scale, data source system 160A may use a secondary storage system to support secondary data protection use cases such as backup, archive, mirroring, disaster recovery, and/or replication. In general, a file system backup is a copy of file system 153 to support protecting file system 153 for quick recovery, often due to some data loss in file system 153, and a file system archive ("archive") is a copy of file system 153 to support longer term retention and review. The "copy" of file system 153 may include only such data as is needed to restore or view file system 153 in its state at the time of the backup or archive. While the techniques of this disclosure are described with respect to retrieving backup data stored to storage system 105 or a secondary storage system, the techniques may be applied with respect to any data stored as a form of backup data to any storage system. For example, backup data can include archive data, replicated data, mirrored data, or snapshots. The techniques of this disclosure apply to data stored in primary or secondary storage systems.

Data protection manager 154 may back up source system data at any time in accordance with backup policies that specify, for example, backup periodicity and timing (daily, weekly, etc.). For example, data protection manager 154 may back up file system data for file system 153 at any time in accordance with backup policies that specify, for example, backup periodicity and timing, which file system data is to be backed up, storage location, access control, and so forth. A backup of file system data may correspond to a state of the file system data at a backup time. Backups 142 may thus represent time series data for file system 153 in that each backup stores a representation of file system 153 at a particular time.

Because source system data changes over time due to creation of new objects, modification of existing objects, and deletion of objects, backups 142 will differ. For example, a backup may include a full backup of the file system 153 data or may include less than a full backup of the file system 153 data, in accordance with backup policies. For example, a given backup of backups 142 may include all objects of file system 153 or one or more selected objects of file system 153. A given backup of backups 142 may be a full backup or an incremental backup.

Backups 142 may be used to generate views and snapshots. A current view generally corresponds to a (near) real-time backup state of the file system 153. A snapshot represents a backup state of the primary storage system 105 at a particular point in time. That is, each snapshot provides a state of data of file system 153, which can be restored to the primary storage system 105 if needed. Similarly, a snapshot can be exposed to a non-production workload, or a clone of a snapshot can be created should a non-production workload need to write to the snapshot without interfering with the original snapshot.

In some examples, data protection manager 154 may use any of backups 142 to subsequently restore the file system (or portion thereof) to its state at the backup creation time, or the backup may be used to create or present a new file system (or "view") based on the backup, for instance. Data protection manager 154 may deduplicate file system data included in a subsequent backup against file system data that is included in one or more previous backup. For example, a second object of file system 153 and included in a second backup may be deduplicated against a first object of file system 153 and included in a first, earlier backup.

Backup manager 154 may apply deduplication as part of a write process of writing (i.e., storing) an object of file system 153 to one of backups 142 in storage system 105. Additional description of an example deduplication process is found in U.S. Patent Application No. 18/183,659, filed 14 March 2023, and titled "Adaptive Deduplication of Data Chunks," which is incorporated by reference herein in its entirety. A user or application associated with application system 102 may have access (e.g., read or write), via data source system 160A or via data management platform 150, to backup data that is stored in a separate storage system.

Data source systems 160 may contain a wealth of information for an enterprise, but backups 142 have high access latencies, being stored to slower storage mediums. In addition, in a modern, distributed architecture, it can be complex to collect, collate, and leverage data from workflows across an organization's data estate. Data source systems 160 may operate in a myriad of locations, spanning private data centers, single or multiple clouds, SaaS applications hosted by other organizations, and edge locations like stores, Internet-of-Things (IoT) devices, and many other applications. Conventional data platforms may store petabytes (or more) of data without classifying, indexing, or tracking it. This is often referred to as "dark data," and it's typically unknown to the organization and is often unstructured and/or difficult to access. The main challenge with dark data is that it represents a missed opportunity for organizations to gain insights and make informed decisions, and secure and protect data.

With advanced backup systems, backup data can be made readily available to be analyzed and used by machine learning / artificial intelligence applications to drive additional value for users and enterprises. Data management platform 150, and in particular data plane 204, may obtain source data from one or more data source systems 160, create indexes on the data, and use the indexes to generate insights into the data.

As used herein, a "dataset" may refer to data stored by or obtained from any of source systems 160 ("source system data") (or other source of data), an index generated based on the source system data, or a combination of the source system data and the index. For example, a dataset includes data from one or more of data source systems 160 and, once indexed by data management platform 150, may include the index. (Although shown in FIG. 1 as transmitted from systems 160 to data management platform 150 as a whole, the dataset is typically streamed or otherwise sent in portions for processing due to its typically large size.) Datasets may include any data, including file system data, archive data, backup data (e.g., backups 142), backup snapshots of file system data, cloud storage data, etc.

U.S. Patent Application 18/618,695 filed 27 March 2024 and titled "DATA RETRIEVAL USING EMBEDDINGS FOR DATA IN BACKUP SYSTEMS," which is incorporated by reference herein in its entirety, describes retrieval augmented generation in which a data platform extracts data in the form of text from a data source, creates indexes on the data, and uses the indexes to generate insights into the data.

Data management platform 150 may provide centralized data management for data associated with a user. The user can be an organization, tenant, human person, enterprise, or human agent thereof, for instance. User interface module 191 of data management platform 150 may generate user interfaces for output and display via user devices, such as user device 115 that access data management platform 150 via network 111. In the example of FIG. 1, user interface module 191 generates and outputs, for display at user device 115, user interface 117. User interface 117 may represent any of the user interface elements depicted by FIGS. 7A-7C, for instance.

Data associated with a user and managed by data management platform 150 can be spread across multiple heterogenous data source systems 160. Data source systems 160 may make data accessible to data management platform 150 via network 111. In some examples, to access the data, data management platform 150 leverages tools 159A-159N (collectively, "tools 159"). Each of data source systems 160 may represent a different type of data source such that the different data source systems are heterogenous and accessed using different tools 159 and protocol and may provide data according to different data types and formats. For example, data source systems 160 can each provide the data in a different format, according to different access protocols or interfaces, are dynamic or static, and otherwise differ in their accessibility to data management platform 150 such that they are heterogenous.

Data source systems 160 can be dynamic or static. Dynamic data source systems are those that store, provide, or otherwise make accessible data that is rapidly changing. These can include machine generated data streams or real-time data feeds, for example. Example dynamic data sources may include application programming interface (API) endpoints or Software as a service (SaaS) application endpoints-such as are illustrated by API 185 for a cloud service 184, machine log data, message bus streams, a relational database-such as is illustrated by database system 182, key/value stores, pub/sub service systems, etc. Static data source systems are those that store, provide, or otherwise make accessible data that changes or updates at a slower rate. Example static source systems include backup sources such as data source system 160A, vectorized context repositories such as are described in U.S. Patent Application 18/618,695, archive systems, etc.

Tools 159 may be functions data management platform 150 invokes to access or manage data stored by or made accessible from data source systems 160. Tools 159 may be implemented as independent software applications, which may execute directly on data management platform 150, or which may execute on one or more external systems. One or more of tools 159 may be third-party applications specially developed to access corresponding ones of data source systems 160.

Each of tools 159 may implement a northbound interface that can be invoked by a data management platform 150 for machine-to-machine communication. Each tool of tools 159 may be capable of interacting with a corresponding one of data source systems 160 to execute requests received at the northbound interface of the tool. To interact with data source systems 160 to access or manage data or access metadata for the data, tools 159 may implement one or more communication protocols. Although shown and described as leveraging tools 159 for obtaining source system data from any of data source system 160, data management platform 150 may obtain source system data in other way, i.e., without use of such tools 159.

In accordance with techniques for one or more examples of this disclosure, data management platform 150 may expose a unified difference data access layer (UDDAL) 190 (shown as "UDDAL 190") via a single application programming interface (API) 191 by which to access differences in data between two snapshots (which again my refer to an incremental backup or a full backup). Rather than compute various diffs differently to achieve different forms of analysis (which may result in a fragmented code base that is difficult to support), computing system 100 may expose UDDAL 190 by which to request diff data in a uniform and extendable manner. UDDAL 190 may output this diff data to a change event stream (which may refer to a message queue or other repository to which various apps may subscribe in order to receive subsets of the diff data). Single API 191 may be referenced by a differencer (within data processing module 183 and/or data protection manager 154) in order to construct and maintain the change event stream, publishing changes to distinct data items (either metadata or content data).

Using tools 159, data management platform 150 may identify changes to data (e.g., between two or more backups 142) stored by one or more of data source systems 160. These changes constitute change events and may represent changes to metadata and/or the underlying content data for granular data items. Data items refer to a particular (or, in other words, granular) data item within an object that can be individually indexed and recovered. An object refers to an entity belonging to the environment subject to protection by data management platform 150 (and represents any domain or environment accessible via tools 159). An object may for example, include a physical or virtual host, a database instance, a file share, a kubernetes ("K8") cluster, an electronic mailbox, an online drive share, an application, etc.

In any event, tools 159 may output an indication of an event corresponding to data protection (e.g., completing a full or incremental backup, performing an archive, restoring a view from a backup, etc.) to a protection event message queue. The differencer may subscribe or otherwise monitor the events, updating the diff data responsive to identifying the occurrence of a new event. The differencer may invoke API 191 to retrieve the difference data (or retrieve changes to the metadata and/or content data in order to determine the difference data). The differencer may update the change event stream with the new difference data.

Apps 192 may subscribe to (or, in other words, register with) the change event queue, defining types of difference data that should be output to each individual app. Apps 192 may therefore only need to incorporate the library for registering with the change event queue and processing the difference data according to an extensible schema. The extensible schema may allow for the addition, modification, and/or removal of difference data and effectively programs a parser to properly segment the difference data. The change event queue may process any new difference data stored to the change event queue and output difference data requested by apps 192.

As shown in the example of FIG. 1, UDDAL 190 may be located within computing system 100 in one or more locations. In some examples, UDDAL 190 may reside on data source system 160A to reside closer to the underlying storage system 105 (which may improve latency in providing difference data concerning the diffs between two of more of backups 142) to apps 192. In some instances, UDDAL 190 may reside within data management platform 150 to provide more centralized access to the difference data. Further, while shown as residing on a single data source system 160A, two or more of data source systems 160 may include a local UDAL 190 that is exposed via a respective single one of APIs 191. UDDAL 190 may therefore be distributed across multiple systems (e.g., data source system 160A and data management platform 150) or centralized within a single system (e.g., data management platform 150).

In this respect, computing system 100 may expose, via a single application programming interface 191, a unified difference data access layer 190 that provides an abstraction layer by which to obtain difference data between two or more events (e.g., protection events, such as backups/snapshots, archives, etc.). Computing system 100 may invoke a trained machine learning model and/or an artificial intelligence model, such as a neural network, a support vector machine, a statistical model, etc. Computing system 100 may interface, via API 191, with UDDAL 190 to obtain difference data, publishing the difference data to the change event stream.

As an example, data processing module 183 may invoke a function of API 191 in order to interface with UDDAL 190 and request difference data. Data processing module 183 may then publish the difference data to the change event queue, which due to the nature of how the difference data is iteratively updated responsive to protection (or other) events may result in the change event queue being referred to as a "change event stream." The change event stream may also be referred to as a "delta stream" given that delta is commonly used to denote a "change" or "difference" in mathematics.

In any event, computing system 100 may next receive, from one or more of apps 192, a request to access at least a portion of the difference data published to the change event stream. The request from one or more of apps 192 may include an object type and data item type along with any other filters (e.g., only filename changes for file metadata, only messages sent to a particular email address, etc.). The request may also identify a data source system 160. As noted above, the request may define a registration or subscription with the change event stream. Data processing module 183 and/or data protection manager 154 may next monitor the change event stream, outputting, responsive to the request and to one or more of apps 192, at least the portion of the difference data published to the change event stream. Apps 192 may utilize the difference data when performing, as a few examples, data analysis, data recovery, data mining, forensic analysis, and/or compliance with regulatory requirements.

The techniques may provide one or more technical advantages that facilitate one or more practical applications. Existing data management platforms for interacting with datasets may include a number of different applications 192 (which may be referred to as "apps") that generate separate differences to achieve different levels of analysis. Each of the apps 192 may generate the differences (which may again be referred to as "diffs") between two snapshots 142 differently or in a proprietary manner. This results in difficulties managing the code base as any changes to one app for a particular diff may not carry over to a different app, which requires separate maintenance of each app. The techniques may provide a UDDAL 190 exposed via single API 191 that allows data processing module 183 and/or data protection manager 154 may invoke to construct and maintain the change event stream. Each of the apps 192 may register with the change event stream to retrieve at least a portion of the diffs. This UDDAL 190 exposed via the single API 191 may allow for a more uniform code base, where updates to the universal data access layer 190 are available to all apps 192 without having to perform much if any edits of the apps 192 (other than invoking possible new functions added to the API 191 via the updates).

The techniques may provide advantages over conventional data management platforms in terms of unifying dataset analysis via the uniform data access layer 190 accessible via the single API 191. Rather than individually update the diff generation performed by each individual app 192 (which may result in diffs having different characteristics), the universal data access layer 190 may provide the single API 191 by which diffs can be generated and filtered to expose only the changes that each of the various apps 192 require to perform further analysis. By limiting the number of updates required, apps 192 may be developed and deployed more quickly (considering that individual testing of the tools and/or agent diff generation is reduced to a single instance rather than being performed individually). Further, the single API 191 allows for better extensibility in that only a single API 191 needs to be updated to extend the functionality (in terms of generating diffs). In addition, the single API 191 may produce a change event stream (which again may be referred to as a "delta stream") to which apps 192 may subscribe to retrieve a specific type of diff data in near-real-time as the changes are published to the delta stream.

In this respect, various aspects of the delta stream techniques may enable data management platform 150 to more uniformly produce diffs used by apps 192 to perform further processing. The ability to generate uniform diffs may allow the data management platform 150 to provide further extensibility to support new or updated apps 192 and promotes a uniform platform by which to build newer apps 192 to address growing needs from organizations in terms of insights into the datasets currently being managed. Developing a platform allows for better interoperability with third party apps while also simplifying development, testing, and deployment of existing first party apps in terms of offloading generation and filtering of diffs.

The techniques may thereby improve one or more of the technical fields of data processing, management, querying, and data insight generation.

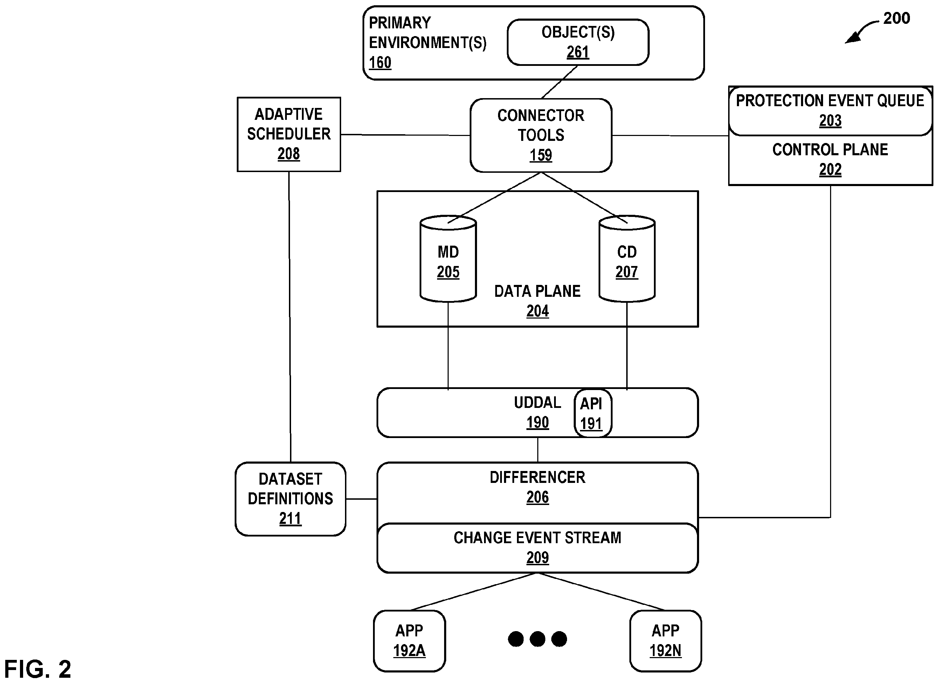

FIG. 2 is a block diagram illustrating an example architecture of a universal difference data access layer for data platforms operating according to various aspects of the techniques described in this disclosure. In the example of FIG. 2, an architecture 200 may provide functional components that may be executed or implemented by any underlying physical hardware and/or a combination of physical hardware (such as a memory, processing circuitry, etc.) and software (e.g., instructions that when executed cause the processing circuitry to perform the operations attributed to each component).

Architecture 200 may include connector tools 159 (which is another way to refer to tools 159 shown in the example of FIG. 1), a control plane 202, a data plane 204, UDDAL 190, a differencer 206, and an adaptive scheduler 208. As further shown in the example of FIG. 2, architecture 200 integrates with one or more primary environments 160 that store objects 261 (where primary environments 160 may be another way to refer to data source systems 160 shown in the example of FIG. 1) and apps 192A-192N ("apps 192").

Connector tools 159 may provide the interfaces noted above with respect to FIG. 1 that enable data management platform 150 to integrate with primary environments 160 and access objects 261 that data management platform 150 may protect (e.g., backup, snapshot, archive, etc.). As noted above, an object is an entity belonging to the environment that data management platform 150 is capable of protecting. This could be a physical or virtual host, a database instance, a file share, a k8s cluster, a mailbox, a onedrive share, or even an application (like JIRA). A DataItem is a granular data item within an object that can be individually indexed and recovered.

Examples of objects and data items are provided below.

| Obj ect | Data Item |
|---|---|
| Virtual machine | Guest operating system files and folders |
| C-drive of a virtual machine | |
| NAS volume Files and folders | OneDrive Files and folders |
| S3 bucket | S3 objects |
| Mailbox | Emails and folders |
| Host | Databases |

Each DataItem has associated metadata and data blob. A DataSet is a collection of objects (with optional filters - e.g. "*.pdf, *.txt", "emails belonging to user X", etc.). This disclosure involves publishing, incrementally (hence the term "delta"), a stream of changes (metadata or data) happening to an object within objects 261 within an end user's primary environment(s) 160. The event stream is published at the granularity of the appropriate DataItem. Other applications can be built that consume this delta-stream.

Connector 159 (which is another way to refer to tools 159) may understand primary environment workflows and communicates, usually via APIs, to primary environment 160 to implement data protection functionality (e.g., backup and recovery). Connectors 159 may be environment specific (e.g., VMware, HyperV, Netapp, Isilon, M365, MS-SQL, Oracle, MongoDB, Cassandra, Outlook, Exchange, ...).

Control plane 202 may represent control logic that programs data plane 204 and/or otherwise modifies operation of data plane 204 in terms of ingesting and processing objects 261 (including metadata associated with objects 261). Control plane 202 may also maintain a protection events message queue (MQ) 203. Connector 159 may publish data-protection-related events (e.g., a snapshot was taken on an object, a backup operation finished, a new sub-object was discovered, etc.).

Data plane 204 may represent a module configured to perform replication/archival services. All the metadata and data ingested by connector 159 are written to data plane 204. Data plane 204 include a metadata (MD) database 205 and a content data (CD) database 207, where metadata database 205 stores the metadata while content data database 207 stores content data. Data plane 204 may provide sophisticated capabilities for computing differentials between two views (file system trees) and two data blobs.
- Given two views, what inodes have changed (added, deleted, modified)
- Given two blobs, what offset ranges have changed (overwritten by the application)

The above capabilities along with application aware logic (e.g., connector 159) can be leveraged to compute application level differentials. For example, consider the following:
- Suppose a blob represents a file underlying a database
- The internal format of the database is known (e.g., by way of connector 159)
- The set of offset ranges that have been overwritten can be used to determine which tables have been modified by the application.

UDDAL 190 may expose metadata and content data of granular data items from a wide variety of environments/workloads. Differentials on a given object can be computed at a granular level using a combination of data plane differential capabilities (above) and connector logic.

Differencer 206 may represent a component that may subscribe to the protection events stored to protection event queue 203. Based on the dataset configured by a user, the difference may act on protection events of interesting objects and leverage UDDAL 190 to compute the granular data items that have changed and publish those changes to change event stream 209.

Change event stream 209 may represent an event stream, implemented as a publishsubscribe or message queue, where the stream of change events to granular data items are published. Change event stream 209 may, as noted above, also be referred to as a "delta" stream because only the incremental changes pertaining to an object are published. For example, if app 192A subscribes to the stream at time T0 and the object is a mailbox, then all emails and attachments created/deleted since time T0 will be incrementally published to change event stream 209. But if there are a million other emails / attachments already present in the mailbox before T0, those may not be published. Differencer 206 may publish the events according to a standard extensible schema (which is shown as dataset definitions 211 in the example of FIG. 2). Data management platform 150 may publish schema 211 for consumption by adaptive scheduler 208, apps 192, and/or any component capable of processing diff data. Any application, using schema 211, may subscribe to change event stream 209.

Adaptive scheduler 208 may orchestrate the ingestion of metadata (and optionally data) from primary environment 160 into data management platform 150 (and more specifically data plane 204). Adaptive scheduler 208 may determine a schedule for a given object, possible based on the following constraints:
1. The freshness service level agreement (SLA) possibly required by the user for the "delta-stream" pertaining to a given object. As an example, the user may require the changes happening on any given data item to be published within X minutes.
2. Whether to ingest metadata only, or data as well, for a given object.
3. The primary workload that is running within the object, so as to not disrupt user experience by adding more load on the compute resources.
4. The change rate of data items within the object. If this change rate is high, then adaptive scheduler 208 may adaptively adjust the frequency of ingestion.

In operation, data plane 204 may interface with connector tools 159 to collect and store metadata 205 and content data 207, where data plane 204 may generate difference data in the manner described above relying on connector 159 may be utilized to provide a context for metadata 205 and content data 207. Data management platform 150 may expose UDDAL 190 via API 191, which differencer 206 may invoke to obtain difference data (which may include differences in metadata 205 between two or more protection events and/or content data 207 between two or more protection events).

Differencer 206 may request difference data via API 191 and store any difference data to change event stream 209. Differencer 206 may register or otherwise subscribe to protection event queue 203 and interface with UDDAL 190 responsive to receiving an indication (or, in other words, a notification) that at least one of the two or more events were published to protection event queue 203.

Within this framework, apps 192 may interface with differencer 206 to register or otherwise subscribe to change event stream 209. Apps 192 may issue a request to register or subscribe to change event stream 209. The request may include one or more indications that identify the object, a data item, and/or one or more filters that define particular metadata types and/or content data types that should be output to the particular one of apps 192 that issued the request. Differencer 206 may process each of the requests and automate output of any diff data that satisfies the filters in the requests, outputting the requested diff data stored to change event stream 209 to the requesting one of apps 192.

In this request, various aspects of the techniques may enable one or more of the following examples.
1. UDDAL: Differentials based on differential or other techniques (two examples follow):
   a. DirectoryWalker for VMware guest files or NAS
   b. MergeDiff of RocksDB keys for M365 (or AAD or other workloads that put data on RocksDB/FusionFs).
2. UDDAL: Bring the compute close to the data. Bring up the UDDAL stack on a dataplane cluster. E.g.,
   a. Same region as the source.
   b. Same cluster where the backup is happening.
   c. The cluster to which it is the most computationally cost-effective to download the snapshot data, considering factors such as network bandwidth consumption, processing overhead, and memory utilization.
3. Adaptive scheduling (user does not need to set up an explicit schedule).
4. Distinguish between metadata and data changes: E.g., a file's permission may have changed, but not the contents. Different applications may react differently to metadata vs data changes.
   a. Metadata changes of a granular item
   b. Offset ranges overwritten for a granular data item
5. Publishing changes automatically, continuously and forever (hence the name "Delta stream") [while the object lives].
6. Efficiency:
   a. Leverage "metadata-only backups"

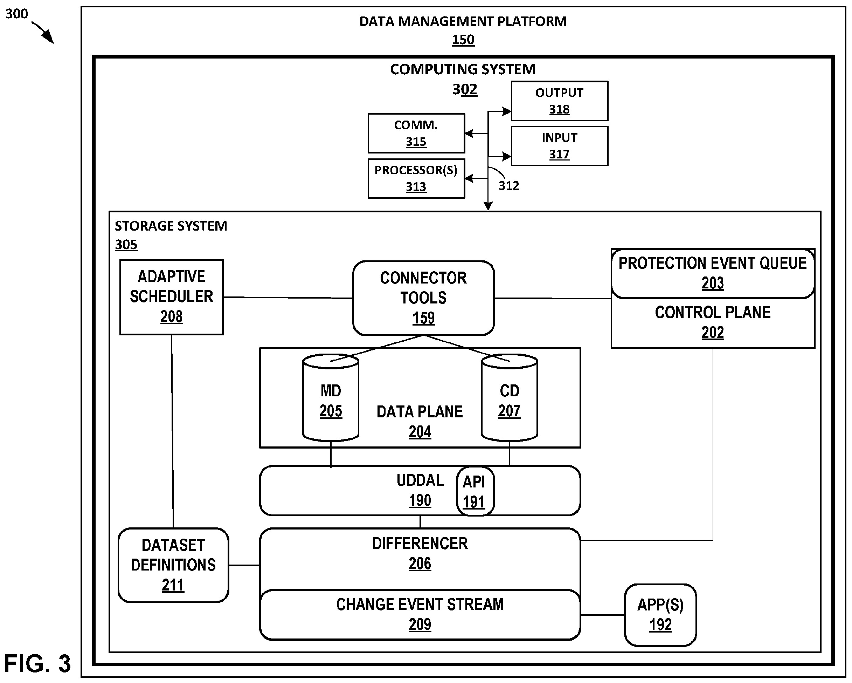

FIG. 3 is a block diagram illustrating an example of a computing system that implements data management platform 150, in accordance with techniques of this disclosure. Computing system 302 may be implemented as any suitable computing system, such as one or more server computers, workstations, mainframes, appliances, cloud computing systems, and/or other computing systems that may be capable of performing operations and/or functions described in accordance with one or more aspects of the present disclosure. In some examples, computing system 302 may represent a cloud computing system, server farm, and/or server cluster (or portion thereof) that provides services to other devices or systems. In other examples, computing system 302 may represent or be implemented through one or more virtualized compute instances (e.g., virtual machines, containers) of a cloud computing system, server farm, data center, and/or server cluster.

In the example of FIG. 3, computing system 302 may include one or more communication units 315, one or more input devices 317, one or more output devices 318, and one or more storage devices of storage system 305. Storage system 305 also includes the modules and/or units shown as architecture 200 in the example of FIG. 2 (e.g., connector tools 159, control plane 202, data plane 204, UDDAL 190, differencer 206, and adaptive scheduler 208. One or more of the devices, modules, storage areas, or other components of computing system 302 may be interconnected to enable inter-component communications (physically, communicatively, and/or operatively). In some examples, such connectivity may be provided by communication channels (e.g., communication channels 312), which may represent one or more of a system bus, a network connection, an inter-process communication data structure, or any other method for communicating data.

The computing system 302 comprises processing means. In the example of FIG. 3, the processing means comprises one or more processors 313 configured to implement functionality and/or execute instructions associated with computing system 302 or associated with one or more modules illustrated herein and/or described below, including tools 159, control plane 202, data plane 204, UDDAL 190, differencer 206, and adaptive scheduler 208. One or more processors 313 may be, may be part of, and/or may include processing circuitry that performs operations in accordance with one or more examples of the present disclosure. Examples of processors 313 include microprocessors, application processors, display controllers, auxiliary processors, one or more sensor hubs, and any other hardware configured to function as a processor, a processing unit, or a processing device. Computing system 302 may use one or more processors 313 to perform operations in accordance with one or more examples of the present disclosure using software, hardware, firmware, or a mixture of hardware, software, and firmware residing in and/or executing at computing system 202.

One or more communication units 315 of computing system 302 may communicate with devices external to computing system 302 by transmitting and/or receiving data, and may operate, in some respects, as both an input device and an output device. In some examples, communication units 315 may communicate with other devices over a network. In other examples, communication units 315 may send and/or receive radio signals on a radio network such as a cellular radio network. In other examples, communication units 315 of computing system 302 may transmit and/or receive satellite signals on a satellite network. Examples of communication units 315 include a network interface card (e.g., such as an Ethernet card), an optical transceiver, a radio frequency transceiver, a GPS receiver, or any other type of device that can send and/or receive information. Other examples of communication units 315 may include devices capable of communicating over Bluetooth^{®}, GPS, NFC, ZigBee^{®}, and cellular networks (e.g., 3G, 4G, 5G), and Wi-Fi^{®} radios found in mobile devices as well as Universal Serial Bus (USB) controllers and the like. Such communications may adhere to, implement, or abide by appropriate protocols, including Transmission Control Protocol/Internet Protocol (TCP/IP), Ethernet, Bluetooth^{®}, NFC, or other technologies or protocols.

One or more input devices 317 may represent any input devices of computing system 302 not otherwise separately described herein. Input devices 317 may generate, receive, and/or process input. For example, one or more input devices 317 may generate or receive input from a network, a user input device, or any other type of device for detecting input from a human or machine.

One or more output devices 318 may represent any output devices of computing system 202 not otherwise separately described herein. Output devices 318 may generate, present, and/or process output. For example, one or more output devices 318 may generate, present, and/or process output in any form. Output devices 318 may include one or more USB interfaces, video and/or audio output interfaces, or any other type of device capable of generating tactile, audio, visual, video, electrical, or other output. Some devices may serve as both input and output devices. For example, a communication device may both send and receive data to and from other systems or devices over a network.

One or more storage devices of storage system 305 within computing system 302 may store information for processing during operation of computing system 302. Storage devices may store program instructions and/or data associated with one or more of the modules described in accordance with one or more examples of this disclosure. One or more processors 313 and one or more storage devices may provide an operating environment or platform for such modules, which may be implemented as software, but may in some examples include any combination of hardware, firmware, and software. One or more processors 313 may execute instructions and one or more storage devices of storage system 305 may store instructions and/or data of one or more modules. The combination of processors 313 and storage system 305 may retrieve, store, and/or execute the instructions and/or data of one or more applications, modules, or software. Processors 313 and/or storage devices of storage system 305 may also be operably coupled to one or more other software and/or hardware components, including, but not limited to, one or more of the components of computing system 302 and/or one or more devices or systems illustrated as being connected to computing system 302.

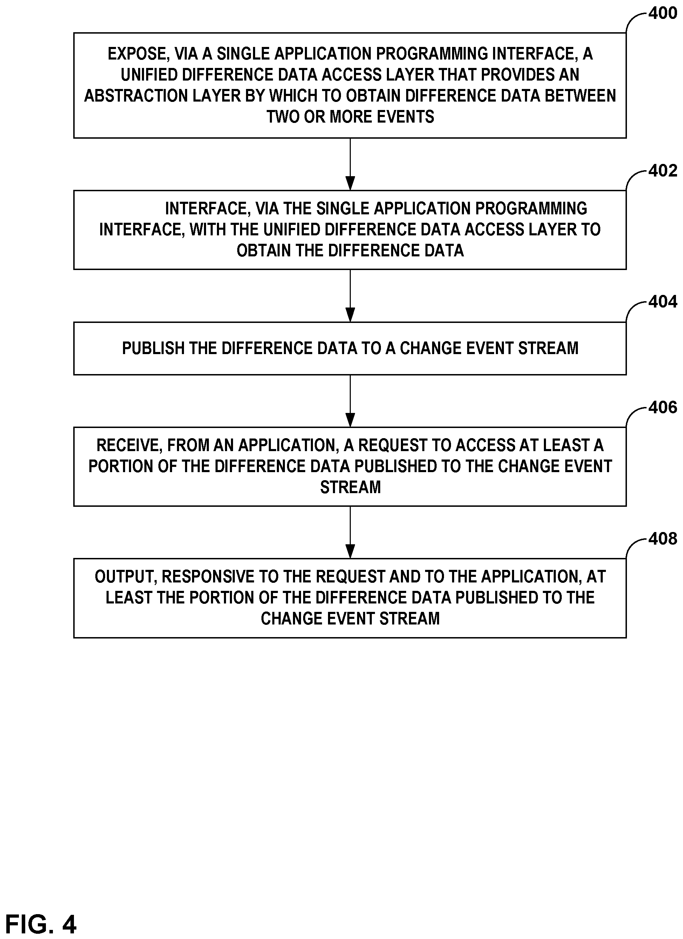

FIG. 4 is a flowchart illustrating example operation of the data management platform shown in the example of FIG. 1 in accordance with various aspects of the techniques. Data processing module 183 may, as noted above, include UDDAL 190, which data processing module 183 may expose, via API 191 to provide an abstraction layer by which to obtain difference data between two or more events (400). The two or more events correspond to protected data. Data processing module 183 may invoke a function of API 191 in order to interface with UDDAL 190 and obtain difference data (402). Data processing module 183 may then publish the difference data to the change event queue (404), which due to the nature of how the difference data is iteratively updated responsive to protection (or other) events may result in the change event queue being referred to as a "change event stream." The change event stream may also be referred to as a "delta stream" given that delta is commonly used to denote a "change" or "difference" in mathematics.

Computing system 100 may next receive, from one or more of apps 192, a request to access at least a portion of the difference data published to the change event stream (406). The request from one or more of apps 192 may include an object type and data item type along with any other filters (e.g., only filename changes for file metadata, only messages sent to a particular email address, etc.). The request may also identify a data source system 160. As noted above, the request may define a registration or subscription with the change event stream. Data processing module 183 and/or data protection manager 154 may next monitor the change event stream, outputting, responsive to the request and to one or more of apps 192, at least the portion of the difference data published to the change event stream (408). Apps 192 may utilize the difference data when performing, as a few examples, data analysis, data recovery, data mining, forensic analysis, and/or compliance with regulatory requirements.

The unified difference data access layer architecture provides scalability advantages over conventional systems with fragmented difference calculation implementations. By centralizing difference calculations through the single API, the data management platform can intelligently allocate computing resources based on actual demand rather than maintaining redundant calculation capabilities across multiple applications. This architecture enables efficient resource utilization when difference calculation demand increases, such as during peak backup periods or when multiple applications simultaneously request difference data. In environments with multiple applications accessing difference data, the unified approach reduces overall system resource utilization compared to systems where each application independently calculates differences.

The subscription-based model for the change event stream reduces unnecessary data processing and network transfer. When multiple applications require access to the same or overlapping sets of difference data, the data management platform calculates these differences only once and distributes the results to all subscribed applications. This approach prevents the growth in computational overhead that would otherwise occur as more applications are added to the system. For large-scale environments with substantial volumes of protected data, this can translate to significant reductions in data transfer across internal networks.

The unified difference data access layer can provide enhanced security through centralized control and consistent policy enforcement. By channelling difference data access through a single API, the data management platform implements a central point for access control. This architectural approach eliminates security inconsistencies that commonly arise when multiple applications implement their own difference calculation mechanisms with varying security standards. The unified difference data access layer can enforce appropriate access controls that restrict which applications can access specific types of difference data, ensuring that sensitive changes are only visible to authorized applications.

The filtering capabilities of the change event stream provide technical advantages for data minimization. Applications may receive only the specific subset of difference data they require for their operation, rather than complete difference datasets that may contain sensitive information irrelevant to their function. This technical implementation reduces the exposure of sensitive data and supports compliance with data protection regulations requiring data minimization. The data management platform can maintain detailed access logs of all difference data requests, enabling comprehensive auditing of which applications accessed specific difference data.

The unified difference data access layer provides technical improvements in system efficiency. For enterprise environments with multiple applications accessing difference data between regular backups of large datasets, the unified approach reduces total CPU utilization compared to independent difference calculations. Memory utilization shows similar improvements, with reduced peak memory requirements. These efficiency gains are achieved through elimination of redundant difference calculations and optimized processing specifically designed for rapid difference identification.

Network bandwidth utilization is substantially reduced through the targeted delivery of difference data. By enabling applications to subscribe only to specific types of changes (e.g., metadata changes for specific file types), the data management platform reduces unnecessary data transfer. In typical environments with heterogeneous data types, applications often request only a fraction of the total difference data available. This selective data distribution significantly reduces internal network bandwidth requirements compared to systems that distribute complete difference datasets to all applications.

The data management platform implements effective error handling and resilience mechanisms to ensure continuous availability of difference data. The system employs approaches to error management that attempt to resolve issues without service interruption and prevents cascading failures when underlying data sources experience problems. These technical measures ensure that temporary failures in data access do not result in permanent loss of difference information.

The change event stream incorporates technical safeguards against data loss during transmission or processing failures. The stream implements delivery guarantees through the message queue with appropriate mechanisms. If an application fails to process a difference event, the system maintains the event in the queue and attempts redelivery according to configurable policies. For certain difference data, the system can be configured to maintain redundant copies of the change event stream across different storage nodes, ensuring that hardware failures do not result in data loss.

The unified difference data access layer enhances system interoperability through standardized interfaces and data formats. By exposing difference data through a single, well-defined API, the data management platform eliminates the technical barriers that typically exist when third-party applications need to access difference information from multiple sources. This standardization reduces integration complexity compared to systems requiring separate integration with multiple proprietary difference calculation mechanisms. The API enables rapid integration by third-party developers without requiring detailed knowledge of the underlying storage systems or backup mechanisms.

The extensible schema used for the change event stream provides technical advantages for long-term interoperability. The schema allows for the addition of new difference data types without breaking compatibility with existing applications. When new data types or attributes are added to the schema, applications that do not recognize these elements can safely ignore them while continuing to process familiar elements. This backward and forward compatibility ensures that applications built against different versions of the schema can coexist within the same environment, eliminating the need for synchronized upgrades across all system components. The change event stream itself utilizes appropriate messaging protocols, further enhancing interoperability with existing enterprise messaging systems.

The unified difference data access layer implements effective abstraction techniques to handle the complexity of diverse data sources and difference calculation methods. This abstraction layer provides a standardized way to obtain difference data regardless of the underlying data sources. The data management platform can translate between native storage formats and normalized representations, perform difference calculations using appropriate algorithms for specific data types, and format the results according to the extensible schema. This approach isolates applications from changes in underlying storage technologies while enabling the system to optimize difference calculations for specific data types and structures.

The data management platform can process various types of data through the unified difference data access layer. For file system data, the differencer can identify changes at multiple levels (file content, metadata, permissions, and structure). For structured data such as databases, the system can perform difference detection that understands data structures and types. For unstructured data such as emails or documents, the system can identify changes beyond simple byte-level differences. These capabilities are exposed through the consistent API, allowing applications to benefit from optimized difference calculations without implementing complex algorithms themselves.

The unified difference data access layer enables resource optimization techniques that improve system efficiency. The data management platform can prevent redundant processing when multiple applications request similar difference data with varying filters. This approach reduces overall computational requirements in typical enterprise environments. The system can effectively manage which difference calculation results should be preserved when resource constraints require prioritization.

Memory management within the data management platform enables processing of large datasets efficiently. CPU resource optimization can be achieved through effective scheduling of difference calculations based on application priority, resource availability, and the computational complexity of the specific difference operation. The system can adaptively schedule ingestion of metadata and content data based on service level agreements, load considerations, and change rates. For computationally intensive difference operations, such as those involving large binary files with scattered changes, the system can quickly identify regions with potential differences before performing detailed comparisons only where necessary. This approach reduces CPU utilization compared to basic difference calculation methods, particularly for large datasets with sparse changes.

Storage resource optimization can be achieved through efficient management of difference data. When multiple applications subscribe to overlapping portions of the change event stream, the system can store the underlying difference data efficiently. This approach significantly reduces storage requirements for the change event stream, particularly in enterprise environments where multiple applications monitor the same critical systems for different purposes. Additionally, the system can implement appropriate retention policies for difference data, preventing unbounded growth of the change event stream storage requirements while ensuring that all applications have access to the difference data they need.

The change event stream architecture provides advantages for real-time processing of difference data. The system can incrementally publish difference data to the change event stream as it is obtained. This enables applications to receive and process changes in near-real-time, rather than waiting for complete difference calculations to finish. The data management platform can ensure that producers and consumers remain balanced, preventing resource exhaustion when applications temporarily fall behind in processing high-volume change events. This real-time capability is particularly valuable for monitoring applications, security tools, and compliance systems that need to respond quickly to specific types of data changes.

The unified difference data access layer and change event stream together enable continuous monitoring of data changes across heterogeneous systems. By subscribing to the change event stream, applications can maintain an up-to-date view of relevant changes without repeatedly polling data sources or performing redundant difference calculations. This approach significantly reduces the latency between when changes occur and when applications can react to those changes, enabling more responsive and efficient data management workflows. For timesensitive operations such as security monitoring or compliance verification, this reduced latency can be critical to meeting operational requirements.

The unified difference data access layer may enable efficient coordination across different environments through its standardized representation of data changes. The unified difference data access layer can execute within data plane computing clusters located strategically to optimize performance. In multi-cloud or hybrid environments where data may be distributed across different platforms, the system can identify and transmit only the specific changes needed to maintain consistency. This targeted approach reduces cross-environment data transfer compared to full data synchronization approaches. The system implements appropriate consistency guarantees through versioned difference records, allowing environments to be synchronized incrementally.

For data protection scenarios, the change event stream provides technical advantages through its ability to capture and track changes between backups, snapshots, or archives. In the event of a system failure requiring recovery, the system can efficiently identify and apply only the specific changes needed rather than performing a full data copy. The change events include sufficient context to ensure that they can be applied correctly even in environments with different underlying storage architectures. This approach significantly reduces recovery time for large datasets, particularly in environments with high change rates but relatively small changed data volumes.

The unified difference data access layer significantly improves operational efficiency for the data management platform. By providing a single, consistent interface for difference calculations, the system reduces the complexity of maintaining multiple difference calculation implementations. This architectural approach simplifies code maintenance, testing, and deployment, reducing the operational overhead associated with supporting multiple applications that need access to difference data. When updates or improvements to difference calculation algorithms are implemented, they immediately benefit all applications that access difference data through the unified layer, eliminating the need to update multiple independent implementations.

The described approach to difference data management also provides advantages for development velocity. New applications that need access to difference data can be developed more quickly by leveraging the existing unified difference data access layer rather than implementing their own difference calculation logic. This accelerates time-to-market for new data management capabilities and ensures consistent behavior across applications. The extensible schema further enhances this advantage by providing a well-defined format for difference data that new applications can immediately understand and process.

The unified approach to difference data management strengthens overall data protection capabilities. By maintaining a comprehensive record of changes through the change event stream, the data management platform enables more sophisticated data protection strategies. Applications can leverage this difference data to implement point-in-time recovery, change auditing, and anomaly detection without requiring direct access to the underlying data sources. This separation of concerns improves system security by reducing the number of components that need direct access to primary data stores.

The unified difference data access layer's ability to distinguish between metadata and content data changes provides technical advantages for targeted data protection. Applications can focus on specific types of changes that are most relevant to their function, such as permission changes for security applications or content changes for compliance monitoring. This granular access to difference data enables more precise and efficient data protection workflows, reducing the computational and storage overhead associated with comprehensive data protection while ensuring that critical changes are properly monitored and protected.

The described capability to execute tools for connecting to primary sources provides technical advantages for heterogeneous data environments. By integrating with the connector tools, the unified difference data access layer can obtain difference data from diverse source systems without requiring custom integration for each source type. This architectural approach enables the data management platform to extend difference calculation capabilities to new data sources by adding appropriate connector tools, rather than modifying the core difference calculation logic. This modularity significantly reduces the complexity of supporting new data sources and ensures consistent difference calculation behavior across all supported source types.

The described notification mechanism, where the system publishes occurrence of events to an event message queue and interfaces with the unified difference data access layer in response to notifications, provides technical advantages for responsive difference calculation. Rather than periodically polling for changes or performing scheduled difference calculations, the system can immediately initiate difference calculations when relevant events occur. This event-driven architecture reduces the latency between events and the availability of corresponding difference data, enabling near-real-time access to changes. Additionally, this approach conserves system resources by performing difference calculations only when necessary, rather than on a fixed schedule that might result in unnecessary processing during periods of low change activity.

### Additional Details

The present disclosure enables at least the following example process. The process may be performed by a data platform implemented by a computing system. The process begins with exposing a single application programming interface (API) with a unified difference data access layer. The unified difference data access layer provides an abstraction layer by which to obtain difference data between two or more events corresponding to protected data. The unified difference data access layer may be implemented as part of a data management platform that manages access to data from various data sources, including backup systems, archive systems, or other data protection systems.

The process continues with interfacing with the unified difference data access layer via the single API. This interfacing operation allows the data management platform to interact with the unified difference data access layer to request difference data. The single API provides a consistent interface for applications to access difference data without needing to implement separate difference calculation mechanisms.

After interfacing with the unified difference data access layer, the process proceeds with obtaining difference data between events. The difference data may represent changes between two or more events, such as backups, snapshots, or archives of protected data. The difference data may include changes to metadata, content data, or both, depending on the specific requirements of applications that will consume the difference data.

The process then includes publishing difference data to a change event stream. The change event stream serves as a repository or message queue to which the difference data is published. The difference data may be published according to an extensible schema that defines the structure and format of the difference data. The difference data may be published incrementally as it is obtained from the unified difference data access layer, allowing for near real-time access to changes.

Next, the process includes receiving a request from an application to access a portion of difference data. An application may submit a request to access specific portions of the difference data published to the change event stream. The request may include filters or criteria that identify the specific difference data of interest to the application. The request may be in the form of a subscription request, where the application registers to receive certain types of difference data as they are published to the change event stream.

The process includes outputting the requested portion of difference data to the application. In response to the request received from the application, the data management platform outputs at least the portion of the difference data that was requested. The output may be filtered according to the criteria specified in the request, ensuring that the application receives only the difference data relevant to its function.

The process may be performed in a different order, and some operations may be performed in parallel rather than sequentially. Additionally, some operations may be repeated or performed continuously as new events occur and new difference data becomes available. The process may be implemented by processing means executing instructions stored on one or more computer-readable storage media.

The unified difference data access layer provided through a single application programming interface may reduce development complexity and maintenance burden. Without this unified approach, applications would need to implement their own difference calculation logic, leading to duplicated code across systems and increased maintenance overhead. When updates or improvements to difference calculation algorithms are needed, they can be implemented once at the API level rather than requiring changes to multiple application codebases.

The change event stream architecture may enable efficient distribution of difference data across multiple consuming applications without redundant processing. Applications can selectively access only the specific portions of difference data they require, rather than processing entire datasets to extract relevant changes. This selective consumption model reduces computational resource requirements and network bandwidth usage while allowing applications to operate with the most current change information.

The abstraction layer design may enhance system extensibility by isolating applications from the underlying implementation details of difference data generation. New data sources, difference calculation methods, or data formats can be incorporated by updating only the unified difference data access layer implementation. Applications can continue to interact through the consistent API interface without modification, allowing for rapid deployment of new capabilities and supporting an evolving data management ecosystem.

Various aspects of the techniques may enable the following examples.

Example 1. A computing system comprising: one or more storage devices storing instructions; and processing circuitry having access to the one or more storage devices and configured with the instructions to: expose, via a single application programming interface executed by a data management platform, a unified difference data access layer that provides an abstraction layer by which to obtain difference data between two or more events; interface, via the single application programming interface, with the unified difference data access layer to obtain the difference data; publish the difference data to a change event stream; receive, from an application, a request to access at least a portion of the difference data published to the change event stream; and output, responsive to the request and to the application, at least the portion of the difference data published to the change event stream.

Example 2. The computing system of example 1, wherein the processing circuitry is configured to incrementally publish the difference data to the change event stream as the difference data is obtained from the unified difference data access layer via the single application programming interface.

Example 3. The computing system of any of examples 1 and 2, wherein the unified difference data access layer executes within a data plane computing cluster of the computing system located in a same region a primary source in which the two or more events occur, a computing cluster on which the two or more events occur, or a computing cluster having a lowest cost to download data that is subjected to the two or more events.

Example 4. The computing system of any of examples 1-3, wherein the two or more events include two or more backups, two or more snapshots, or two or more archives.

Example 5. The computing system of any of examples 1-4, wherein the processing circuitry is configured to receive, from the application, a subscription request identifying at least the portion of the difference data published to the change event stream that is to be output to the application.

Example 6. The computing system of example 5, wherein the subscription request identifies one or more filters to be applied to the difference data published to the change event stream in order to identify at least the portion of the difference data.

Example 7. The computing system of any of examples 1-6, wherein the processing circuitry is configured to publish the difference data according to an extensible schema, and wherein the processing circuitry is further configured to publish the extensible schema to enable the application to parse at least the portion of the difference data output to the application.

Example 8. The computing system of any of examples 1-7, wherein the processing circuitry is configured to adaptively schedule ingestion of one or more of metadata and content data based on one or more of a service level agreement for a primary source on which the two or more events are performed, a load on the primary source, and a change rate on the primary source.

Example 9. The computing system of any of examples 1-8, wherein the processing circuitry is further configured to execute one or more tools for connecting to one or more primary sources on which the two or more events are performed.

Example 10. The computing system of any of examples 1-9, wherein the processing circuitry is further configured to publish occurrence of the two or more events to an event message queue, and wherein the processing circuitry is configured to interface with the unified difference data access layer responsive to receiving a notification that at least one of the two or more events were published to the event message queue.

Example 11. The computing system of any of examples 1-10, wherein the difference data includes one or more of metadata descriptive of a data item within an object to which the two or more events are performed and content data of the data item within the object to which the two or more events are performed.

Example 12. A method comprising: exposing, via a single application programming interface executed by a data management platform, a unified difference data access layer that provides an abstraction layer by which to obtain difference data between two or more events; interfacing, via the single application programming interface, with the unified difference data access layer to obtain the difference data; publishing the difference data to a change event stream; receiving, from an application, a request to access at least a portion of the difference data published to the change event stream; and outputting, responsive to the request and to the application, at least the portion of the difference data published to the change event stream.

Example 13. The method of example 12, wherein publishing the difference data comprises incrementally publishing the difference data to the change event stream as the difference data is obtained from the unified difference data access layer via the single application programming interface.

Example 14. The method of any of examples 12 and 13, wherein the unified difference data access layer executes within a data plane computing cluster of the computing system located in a same region a primary source in which the two or more events occur, a computing cluster on which the two or more events occur, or a computing cluster having a lowest cost to download data that is subjected to the two or more events.

Example 15. The method of any of examples 1-14, wherein the two or more events include two or more backups, two or more snapshots, or two or more archives.

Example 16. The method of any of examples 12-15, wherein receiving the request comprises receiving, from the application, a subscription request identifying at least the portion of the difference data published to the change event stream that is to be output to the application.

Example 17. The method of example 15, wherein the subscription request identifies one or more filters to be applied to the difference data published to the change event stream in order to identify at least the portion of the difference data.

Example 18. The method of any of examples 12-17, wherein publishing the difference data comprises publishing the difference data according to an extensible schema, and wherein the method further comprises publishing the extensible schema to enable the application to parse at least the portion of the difference data output to the application.

Example 19. The method of any of examples 12-18, further comprising adaptively scheduling ingestion of one or more of metadata and content data based on one or more of a service level agreement for a primary source on which the two or more events are performed, a load on the primary source, and a change rate on the primary source.

Example 20. Non-transitory computer-readable storage media storing instructions that, when executed, causes processing circuitry to: expose, via a single application programming interface executed by a data management platform, a unified difference data access layer that provides an abstraction layer by which to identify difference data between two or more events; interface, via the single application programming interface, with the unified difference data access layer to obtain the difference data; publish the difference data to a change event stream; receive, from an application, a request to access at least a portion of the difference data published to the change event stream; and output, responsive to the request and to the application, at least the portion of the difference data published to the change event stream.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

In accordance with one or more aspects of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structure or any other structure suitable for implementation of the techniques described. In addition, in some examples, the functionality described may be provided within dedicated hardware and/or software modules. Also, the techniques could be fully implemented in one or more circuits or logic elements.

Processing means, as used herein, may comprise processing circuitry as has been described above. In some examples, the processing means may comprise at least one processor and at least one memory with computer code comprising a set of instructions, which, when executed by the at least one processor, causes the at least one processor to perform any of the functions described herein. In some examples, the processing means may receive computer code comprising the set of instructions from at least one memory coupled to the processing means.

The techniques of this disclosure may be implemented in a wide variety of devices or apparatuses, including a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

## Claims

1. A method for a data management platform, the method comprising:
exposing, via a single application programming interface executed by the data management platform, a unified difference data access layer that provides an abstraction layer by which to obtain difference data between two or more events corresponding to protected data;
interfacing, via the single application programming interface, with the unified difference data access layer to obtain the difference data;
publishing the difference data to a change event stream;
receiving, from an application, a request to access at least a portion of the difference data published to the change event stream; and
responsive to the request, outputting, to the application, at least the portion of the difference data published to the change event stream.

2. The method of claim 1, wherein publishing the difference data comprises incrementally publishing the difference data to the change event stream as the difference data is obtained from the unified difference data access layer via the single application programming interface.

3. The method of claim 1 or claim 2, wherein the unified difference data access layer executes within a data plane computing cluster of a computing system located in at least one of: a same region as a primary source in which the two or more events occur, a computing cluster on which the two or more events occur, or a computing cluster having a lowest computational cost to download data that is subjected to the two or more events.

4. The method of any preceding claim, wherein the two or more events include two or more backups, two or more snapshots, or two or more archives.

5. The method of any preceding claim, wherein receiving the request comprises receiving, from the application, a subscription request identifying at least the portion of the difference data published to the change event stream that is to be output to the application.

6. The method of claim 5, wherein the subscription request identifies one or more filters to be applied to the difference data published to the change event stream in order to identify at least the portion of the difference data.

7. The method of any preceding claim,
wherein publishing the difference data comprises publishing the difference data according to an extensible schema, and
wherein the method further comprises publishing the extensible schema to enable the application to parse at least the portion of the difference data output to the application.

8. The method of any preceding claim, further comprising adaptively scheduling ingestion of one or more of metadata and content data based on one or more of a service level agreement for a primary source on which the two or more events are performed, a load on the primary source, and a change rate on the primary source.

9. The method of any preceding claim, further comprising executing one or more tools for connecting to one or more primary sources on which the two or more events are performed.

10. The method of any preceding claim, further comprising:
publishing occurrence of the two or more events to an event message queue; and
responsive to receiving a notification that at least one of the two or more events were published to the event message queue, interfacing with the unified difference data access layer.

11. The method of any preceding claim, wherein the difference data includes one or more of metadata descriptive of a data item within an object to which the two or more events are performed and content data of the data item within the object to which the two or more events are performed.

12. A computing system implementing a data management platform, the computing system comprising:
processing means configured to:
expose, via a single application programming interface executed by the data management platform, a unified difference data access layer that provides an abstraction layer by which to obtain difference data between two or more events corresponding to protected data;
interface, via the single application programming interface, with the unified difference data access layer to obtain the difference data;
publish the difference data to a change event stream;
receive, from an application, a request to access at least a portion of the difference data published to the change event stream; and
responsive to the request, output, to the application, at least the portion of the difference data published to the change event stream.

13. The computing system of claim 12, wherein the processing means is configured to incrementally publish the difference data to the change event stream as the difference data is obtained from the unified difference data access layer via the single application programming interface.

14. The computing system of claim 12 or claim 13, wherein the unified difference data access layer executes within a data plane computing cluster of a computing system located in at least one of: a same region as a primary source in which the two or more events occur, a computing cluster on which the two or more events occur, or a computing cluster having a lowest computational cost to download data that is subjected to the two or more events.

15. One or more computer-readable storage media storing instructions that, when executed, causes processing means to perform the method of any of claims 1 to 11.
